# EUROPEAN PATENT APPLICATION

(11) **EP 3 950 172 A1**
(43) Date of publication of application: **09.02.2022**
(21) Application number: 20779441.3
(22) Date of filing: 11.03.2020
(51) Int. Cl.: B22D 23/10, C21C 7/04, C21C 7/076, B22D 11/041, C22B 9/18, B22D 11/108, B22D 11/111, B22D 11/116, C21C 7/064, C22B 9/10, B23K 35/36

(54) **FLUX USED IN ELECTRO-SLAG REMELTING PROCESS, METHOD FOR PRODUCING SAID FLUX, AND METHOD FOR PRODUCING HIGH-PURITY STEEL**

(30) Priority: 26.03.2019 JP 2019058333
(71) Applicant: Denka Company Limited, Tokyo 103-8338 (JP)
(72) Inventor: HIRATA Satoshi, Tokyo 103-8338 (JP); KOYAMA Atsunori, Tokyo 103-8338 (JP); TANAKA Takaaki, Tokyo 103-8338 (JP)
(74) Representative: Gulde & Partner
(86) International application number: PCT/JP2020/010559
(87) International publication number: WO 2020/195840

(57) **Abstract**

A flux is used in an electro-slag remelting method. When a water content of the flux determined using a karl fischer method is W and a water content change when the flux is placed in an environment of 30°C and 85% RH for 14 days is ΔW, W is equal to or less than 0.03% by mass and ΔW is equal to or less than 0.01% by mass. The flux preferably contains CaF₂ and Al₂O₃.

## Description

### TECHNICAL FIELD

The present invention relates to a flux used in an electro-slag remelting method, a method for producing the flux, and a method for producing a high-purity steel.

### BACKGROUND ART

An electro-slag remelting method is a kind of a special melting method for producing a high-purity metal by remelting and refining a metal material (for example, a steel material). This method is also referred to as an "ESR method", an "ESR process", and the like by taking the acronym of Electro-Slag Remelting process in English (hereinafter, these expressions are also used in the present specification).

In the ESR method, a metal material is highly purified by a flow in which (1) first, an electrode metal is melted by joule heating of a slag, (2) impurities (sulfur, oxygen, and the like) are removed when a molten metal droplets thereof pass through a slag pool, and (3) the molten metal solidifies at a bottom of a furnace to form an ingot.

Here, a slag containing CaF₂ or Al₂O₃ as a main component is often used. That is, a solid flux containing CaF₂ or Al₂O₃ as a main component is melted at a high temperature to form the slag, which is often performed.

As an example, Patent Document 1 describes a slag for an electro-slag remelting method having an analytical composition of 0.2% to 15% by weight of SiO₂, 12% to 40% by weight of Al₂O₃, 15% to 40% by weight of an alkaline earth metal oxide, 12% to 75% by weight of CaF₂, 0.5% by weight or less of FeO, 1% by weight or less of MnO, and 10% by weight or less of TiO₂. In addition, the document (page 2, left column) describes that a water content in a slag should be reduced in order to cause hydrogen embrittlement of a metal material to be melted and refined by water derived from a flux. Furthermore, the document (page 3, right column) describes that the water content of the slag and a change over time thereof were measured by allowing magnesium perchlorate to absorb the water released by heating a granular slag to 650°C.

As another example, Patent Document 2 discloses an ESR method in which a composition of a flux to be added is set to satisfy 20 to 60 mass% of CaO, 10 to 40 mass% of Al₂O₃, 20 to 60 mass% of CaF₂, 1 to 10 mass% of an iron oxide, and CaO/Al₂O₃ of 1.0 to 6.0.

### RELATED DOCUMENT

### PATENT DOCUMENT

[Patent Document 1] Japanese Examined Patent Publication No. 57-060411
[Patent Document 2] Japanese Unexamined Patent Publication No. 2013-049908

### SUMMARY OF THE INVENTION

### TECHNICAL PROBLEM

As a problem in an ESR method, it is known that a defect is likely to occur especially at a bottom of an ingot obtained. Specifically, it is known that water derived from a flux causes hydrogen embrittlement of a metal material to be melted and refined, especially in an initial stage of an entire ESR process. This is also described in Patent Document 1 described in the above section of BACKGROUND ART.

However, as the findings of the present inventors, there was a still room for improvement in a flux with a reduced water content of the related art, regarding the problem of hydrogen embrittlement of a metal material. For example, there was a room for further improvement in terms of a yield of an ingot obtained by an ESR method.

The present invention has been made in view of such circumstances . An object of the present invention is to provide a flux used in an electro-slag remelting method capable of producing a high-purity metal in which hydrogen embrittlement is suppressed with a high yield.

### SOLUTION TO PROBLEM

As a result of intensive studies, the present inventors have completed the invention to be provided below and solved the above problem.

According to the present invention, there is provided a flux used in an electro-slag remelting method, in which when a water content of the flux determined using a karl fischer method is W and a water content change when the flux is placed in an environment of 30°C and 85% RH for 14 days is ΔW, W is equal to or less than 0.03% by mass and ΔW is equal to or less than 0.01% by mass.

In addition, according to the present invention, there is provided a method for producing a high-purity steel, the method including a step of refining a raw material steel into a high-purity steel by remelting using an electro-slag remelting method, in which a melt of the flux is used as a molten slag.

In addition, according to the present invention, there is provided a method for producing the flux, the method including a melt mixing step of melting and mixing, at least, a compound containing CaF₂ and a compound containing Al₂O₃ at equal to or higher than 1600°C.

### ADVANTAGEOUS EFFECTS OF INVENTION

According to the present invention, there is provided a flux used in an electro-slag remelting method capable of producing a high-purity metal in which hydrogen embrittlement is suppressed with a high yield.

### BRIEF DESCRIPTION OF THE DRAWINGS

Fig. 1 shows a view for explaining a method for producing a high-purity steel by an electro-slag remelting method.
Fig. 2 shows a view for explaining a method for producing a high-purity steel by an electro-slag remelting method.
Fig. 3 shows a chart obtained by XRD measuring a flux of Examples.

### DESCRIPTION OF EMBODIMENTS

Hereinafter, embodiments of the present invention will be described in detail with reference to the drawings.

In the drawings, similar components are designated by the same reference numerals, and the description thereof will not be repeated.

In order to avoid complication, in a case where there are a plurality of the same components in the same drawing, only one of thereof may be denoted and not all thereof may be denoted in some cases.

The drawings are for explanation purposes only. A shape or a dimensional ratio of each member in the drawing does not necessarily correspond to an actual article.

In the present specification, the term "slag" basically refers to a state in which a flux that is a solid at a room temperature (23°C) is heated and melted at a high temperature. However, depending on the context, it is not limited thereto (for example, in Patent Document 1, a flux that is solid at a room temperature seems to be expressed as a "slag").

### <Flux>

A flux of the present embodiment is used in an electro-slag remelting method.

A water content of the flux determined using a karl fischer method is W and a water content change when the flux is placed in an environment of 30°C and 85% RH for 14 days (Water content after 14 days - Initial water content) is ΔW. In this case, W is equal to or less than 0.03% by mass, and preferably equal to or less than 0.02% by mass. In addition, ΔW is equal to or less than 0.01% by mass, preferably equal to or less than 0.005% by mass, and more preferably equal to or less than 0.003% by mass.

Here, a lower limit of W is ideally 0, but in practice, is, for example, equal to or more than 0.00001% by mass. A lower limit of ΔW is, for example, equal to or more than -0.005%.

The present inventors paid attention particularly to a water content of a flux in order to improve a yield of an ingot to be obtained by an ESR method. Specifically, the present inventors determined to measure the water content using the karl fischer method in order to accurately control and optimize the water content of the flux, and designed the flux such that the water content W obtained by the measurement is equal to or less than 0.03% by mass.

In addition, the present inventors considered that not only the water content of the flux but also a change over time thereof is closely related to the yield from the viewpoint of improving the yield of the ingot. Based on the consideration, the present inventors designed the flux such that the water content change ΔW when placed in an environment of 30°C and 85% RH for 14 days was equal to or less than 0.01% by mass.

When using a flux satisfying that "W is equal to or less than 0.03% by mass" and "ΔW is equal to or less than 0.01% by mass", a high-purity metal with suppressed hydrogen embrittlement can be produced with good yield.

In order to make W the above value, for example, when producing a flux, it is preferable to heat a raw material to a sufficiently high temperature using an electric furnace or the like to remove water.

Further, in order to make ΔW the above value, for example, it is preferable that: (1) the amount of the CaO component contained in the flux is reduced; (2) even when the flux contains a certain amount of the CaO component, the CaO is reacted with other components in the flux so that CaO does not exist alone; and/or (3) a particle size (particle diameter) of the flux is appropriately controlled.

These matters will be described in detail later.

The water content can be measured by the karl fischer method with high accuracy using, for example, an apparatus (Mitsubishi Chemical Analytech Co., Ltd./CA-100 type).

Moreover, Patent Document 1 describes, as a method for measuring the water content, a method of absorbing water released by heating granular slag to 650°C to magnesium perchlorate. However, in the method, it may not be able to absorb all the water by the magnesium perchlorate, or substances other than water may be absorbed by the magnesium perchlorate. Therefore, it is considered that an accuracy of the water content quantification is lower compared to the karl fischer method and the water cannot be appropriately measured.

Furthermore, in Patent Document 1, a moisture absorption of a flux which was stored by being placed in a "paper bag with polyethylene lining", that is, in a bag blocking moisture, in environment in which an absolute humidity of an indoor air fluctuates greatly between "4 to 17 g/m³" is measured. Under such an evaluation condition, it can be said that the hygroscopicity of the "flux itself" is not properly evaluated.

In the present embodiment, the hygroscopicity of the flux itself can appropriately be measured by evaluating the hygroscopicity of the flux in a bare state not put in the bag, in a certain condition of 30°C and 85% RH. Thus, in the flux of the present embodiment, ΔW obtained by the measurement is within a certain numerical range.

Amore specific description of the flux of the present embodiment will be continued.

### (Chemical composition of flux)

### • CaF₂ and Al₂O₃

The flux of the present embodiment preferably contains CaF₂ and Al₂O₃. More preferably, a part or all of the CaF₂ is present as a CaF₂ crystal phase and a part or all of the Al₂O₃ is present as an Al₂O₃ crystal phase in the flux of the present embodiment.

Since the flux contains the CaF₂ and the Al₂O₃, there is an advantage that an appropriate melting temperature of the flux can be obtained.

In a case where the flux of the present embodiment contains CaF₂, the content proportion of the CaF₂ crystal phase in the entirety of the crystal phases in the flux is preferably equal to or more than 60% by mass and equal to or less than 80% by mass, and more preferably equal to or more than 65% by mass and equal to or less than 75% by mass.

In a case where the flux of the present embodiment contains Al₂O₃, the content proportion of the Al₂O₃ crystal phase in the entirety of the crystal phases in the flux is preferably equal to or more than 5% by mass and equal to or less than 15% by mass, and more preferably equal to or more than 7% by mass and equal to or less than 13% by mass.

### • CaO

The flux of the present embodiment preferably does not contain the CaO component as a chemical component (0% by mass), or even when containing the CaO component, the amount thereof is equal to or less than 7% by mass in the entirety of the flux. The amount of the CaO component in the entirety of the flux is more preferably equal to or less than 5% by mass, and further preferably equal to or less than 4% by mass.

The CaO component here includes both CaO in the CaO·6Al₂O₃ crystal phase to be described later and other CaO.

The CaO is a substance having high hygroscopicity. Therefore, when reducing the amount of the CaO component in the flux, it is easy to set ΔW to a desired value, particularly.

However, from a viewpoint different from the reduction of the water content, for example, from the viewpoint of appropriately increasing a basicity of the slag to be obtained by melting the flux while keeping the melting point of the flux low, the flux of the present embodiment is preferable to contain equal to or more than 0.1% by mass of the CaO component in the entirety of the flux.

### • CaO·6Al₂O₃

The flux of the present embodiment preferably contains CaO·6Al₂O₃. The CaO·6Al₂O₃ is preferably present in the flux in the form of a crystal phase.

It is considered that the CaO·6Al₂O₃ has a structure in which the CaO component is surrounded by the 6Al₂O₃. Therefore, it is considered that moisture absorption can be suppressed compared to a case where CaO is present alone. Therefore, when the flux contains the CaO·6Al₂O₃, it is easy to set ΔW to a desired value, particularly.

As another viewpoint, it is considered that the melting point of the flux can further be lowered by containing the CaO·6Al₂O₃ in the flux of the present embodiment. Lowering the melting point of the flux leads to a reduction in energy and thus in reduction in costs.

The melting point of the Al₂O₃ is 2072°C (literature value) which is extremely high, whereas the melting point of CaO·6Al₂O₃ is about 1850°C (literature value), which is lower than the melting point of Al₂O₃.

The CaO·6Al₂O₃ contains 6 mol of Al₂O₃ with respect to 1 mol of CaO, as can be seen from a composition formula thereof. From above, it is presumed that CaO·6Al₂O₃ has physical/chemical properties close to those of Al₂O₃.

That is, it is presumed that the flux of the present embodiment contains an appropriate amount of CaO·6Al₂O₃ "which is considered to have properties close to Al₂O₃ but has a melting point lower than Al₂O₃", thus has a low melting point as an entirety of the flux.

In a case where the flux of the present embodiment contains the CaO·6Al₂O₃, the content proportion of the CaO·6Al₂O₃ crystal phase in the entirety of the crystal phases in the flux is equal to or more than 10% by mass and equal to or less than 30% by mass, preferably equal to or more than 12% by mass and equal to or less than 25% by mass, and more preferably equal to or more than 14% by mass and equal to or less than 20% by mass.

• Other components: MgO component, SiO₂ component, and the like It is preferable that the flux of the present embodiment contains, for example, one or plural of MgO, SiO₂, and the like, as components other than the above.

It is considered that when the flux contains an appropriate amount of the MgO component, a basicity of the slag obtained by melting the flux can be appropriately increased while keeping the melting point of the flux low. This is preferable from the viewpoint of a removal performance of a sulfur component when producing the ingot.

When the flux contains an appropriate amount of the SiO₂ component, it becomes easy to design to increase an electric resistance of the slag obtained by melting the flux while keeping a performance such as a removability of a sulfur component. This is preferable in that an electrode metal can be easily melted. In addition, when the flux contains an appropriate amount of SiO₂ component, a ferrite phase of a steel tends to be strengthened and a strength of a steel after refining tends to increase.

When the flux of the present embodiment further contains MgO component, the content proportion thereof is preferably equal to or more than 0.005% by mass and equal to or less than 0.5% by mass, and more preferably equal to or more than 0.01% by mass and equal to or less than 0.03% by mass, in the entirety of the flux.

When the flux of the present embodiment further contains SiO₂ component, the content proportion thereof is preferably equal to or more than 0.3% by mass and equal to or less than 1.5% by mass, and more preferably equal to or more than 0.5% by mass and equal to or less than 1.0% by mass, in the entirety of the flux.

### • Method of quantifying amount of each component

A content proportion of each crystal phase of CaF₂, Al₂O₃, and CaO·6Al₂O₃ can be quantitatively analyzed by, for example, analyzing a powder X-ray diffraction (XRD) pattern by a Rietveld method.

More specifically, each content proportion can be determined through a method of comparing a diffraction intensity-incident angle chart obtained by the XRD analysis with an XRD pattern simulated from a crystal structure model, and optimizing a mass fraction by the least squares method so that residuals of an experimental XRD pattern and a calculated XRD pattern is minimized.

The amount of chemical components such as the CaO component, MgO component, and SiO₂ component can be quantified by a fluorescent X-ray elemental analysis method (X-ray Fluorescence Analysis, XRF), an ion electrode method, a combination of thereof, and the like.

Basically, it is preferable that the flux of the present embodiment contains as little component as possible other than the above. That is, it is preferable that the amount of impurities contained in the flux of the present embodiment is as small as possible. When the amount of components other than the above is small, a fluctuation in the properties of the slag obtained by melting the flux can be suppressed.

Specifically, the content proportion of the impurities is preferably equal to or less than 5% by mass, more preferably equal to or less than 3% by mass, and further preferably equal to or less than 1% by mass in the entirety of the flux.

### (Flux properties/production method)

The properties of the flux of the present embodiment can vary. From the viewpoint of controlling ΔW to a desired value (and thereby producing a high-purity metal in which hydrogen embrittlement is suppressed with good yield), it is preferable that the flux is granular at room temperature. The room temperature is, for example, 23°C.

As an aspect, the flux of the present embodiment can be produced by mixing particles of each of the above components. For example, the flux can be obtained by (1) first, preparing a raw material for each of CaF₂, Al₂O₃, and CaO·6Al₂O₃, (2) separately melting, cooling, pulverizing each raw material and sieving the raw material as needed, and (3) blending the obtained pulverized product in an appropriate ratio.

On the other hand, as another aspect, the flux of the present embodiment may contain a molten mixture at least containing a compound containing CaF₂ crystal phase and a compound containing Al₂O₃ crystal phase. Specifically, the flux of the present embodiment preferably contains the molten mixture of CaF₂ and Al₂O₃ in which CaF₂ and Al₂O₃ are not present as "separate particles" as described above, but CaF₂ and Al₂O₃ are melted together to form a mixture.

The flux at least containing a molten mixture of the compound containing CaF₂ and the compound containing Al₂O₃ can be produced by (1) mixing the compound containing CaF₂ and the compound containing Al₂O₃ (in some cases, other trace components) of raw materials while melting together to form a melt and (2) cooling and pulverizing the melt, and sieving the melt as needed.

A temperature at the time of the melt mixing of (1) is preferably equal to or higher than 1600°C.

Regarding the pulverization or sieving of (2), it is preferable that a final particle size is as described later.

As the findings of the present inventors, water vapor in an atmosphere reacts with a part of CaF₂, Al₂O₃, or the like to form the CaO·6Al₂O₃ by setting a condition at the time of (1) appropriately, in particular, setting the temperature to be equal to or higher than 1600°C.

When appropriately adjusting the particle size of the flux of the present embodiment, it is easier to set ΔW to a further desired value.

A specific surface area can be reduced by appropriately increasing the particle size of the flux. This leads to a reduction in hygroscopicity.

As an example, when the flux of the present embodiment passes through a sieve having a nominal opening of 500 µm (corresponding to a sieve of No. 35 of ASTM E11) defined by JIS Z 8801-1, a passage rate of the flux (particles) is preferably equal to or less than 55% by mass, and more preferably equal to or less than 45% by mass based on the entirety of the flux (that is, a flux (particles) having a passage rate of preferably equal to or more than 45% by mass and more preferably equal to or more than 55% by mass has a large particle size of equal to or more than a sieve having an opening of 500 µm).

On the other hand, from the viewpoint of reducing a "bulk" during storage and facilitating the melting during refining, the particle size of the flux of the present embodiment is preferably appropriately small. Specifically, when the flux of the present embodiment passes through a sieve having a nominal opening of 2.8 mm (corresponding to a sieve of No. 7 of ASTM E11) defined by JIS Z 8801-1, it is preferable that substantially all the flux passes through the sieve, and almost no residue remains on the sieve (specifically, equal to or less than 1% by mass).

However, as the findings of the present inventors, even when the particle size does not necessarily correspond to the above, it is possible to sufficiently set ΔW to a desired value by, for example, reducing the amount of CaO present alone in the flux.

### <Method for producing high-purity steel>

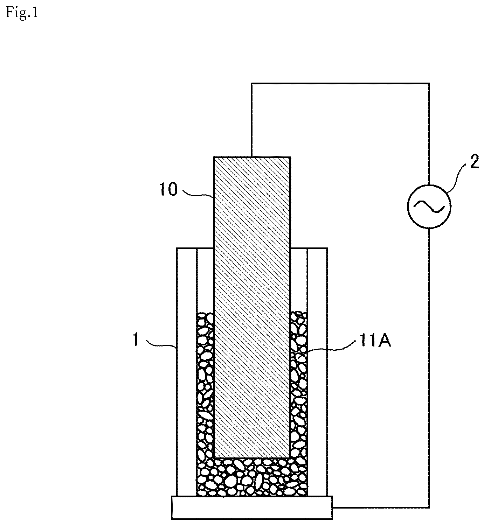

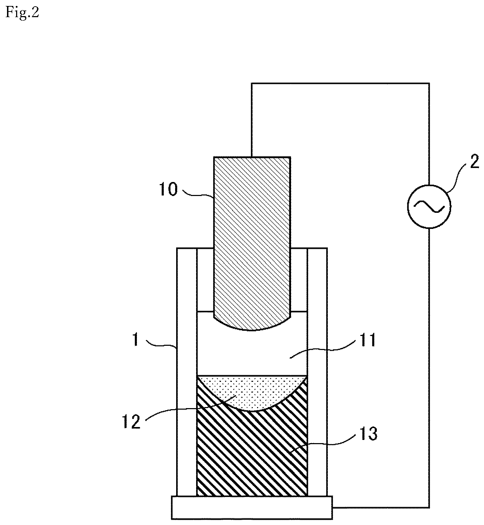

Figs. 1 and 2 are schematic views for explaining an example of a method for refining a raw material steel using an ESR method to produce a high-purity steel. Specifically, Fig. 1 is a view schematically showing a state at a start of production of high-purity steel using the ESR method, and Fig. 2 is a diagram schematically showing a state after a while from the start of Fig. 1.

In Fig. 1, a raw material steel (an electrode 10) is electrically connected to one end of a power supply 2. A composition of the raw material steel (electrode 10) is not particularly limited. The composition can be determined to correspond to a high-purity steel to obtain.

The raw material steel (electrode 10) is installed inside an ESR furnace 1 so as to be movable up and down. At the start of a production, a solid (granular at room temperature) flux 11A is spread on a lateral portion and a lower portion of the raw material steel (electrode 10). The flux 11A has the above-described composition.

The other end of the power supply 2 is electrically connected to a conductive hearth of the ESR furnace 1.

A cooling unit such as a water cooling unit may be provided on a furnace wall of the ESR furnace 1 (not shown in Fig. 1).

In Fig. 1, the ESR furnace 1 is shown in an open form, but the smelting of the raw material steel may be performed in a closed ESR furnace in which an atmosphere is adjusted.

In the production of the high-purity steel, an electric current is passed from the power supply 2 to energize the electrode 10 and the flux 11A. Accordingly, the flux 11A and a tip of the electrode 10 are melted by joule heating. The flux 11A is melted into a slag 11. Furthermore, a metal melted from the tip of the electrode 10 descends in the slag 11. In this case, impurities (such as a sulfur atom) in the metal are incorporated into the slag 11, and the raw material steel is refined. A descended metal forms a molten pool 12 below the slag 11. Moreover, the melt is gradually cooled to produce a high-purity steel (an ingot 13) (hereinabove, see Fig. 2) .

In Fig. 2, a liquid level of the slag 11 gradually moves upward as the ingot 13 and the molten pool 12 are formed. Therefore, the electrode 10 is appropriately moved accordingly, and remelting of the electrode 10 is continuously performed.

From the above, the high-purity steel can be obtained.

Although the embodiments of the present invention have been described above, these are examples of the present invention, and various configurations other than the above can be adopted. In addition, the present invention is not limited to the embodiment, and modifications, improvements, and the like within the range in which an object of the present invention can be achieved are included in the present invention.

### [Examples]

Embodiments of the present invention will be described in detail based on Examples and Comparative Examples. The present invention is not limited to Examples.

### <Example 1: Production of flux>

First, the following CaF₂ and Al₂O₃ were prepared. A "particle size" was measured using a sieve for JIS test.
- CaF₂: Compounding ratio of 70% by mass, purity of equal to or higher than 98% by mass, and particle size of equal to or less than 3 mm
- Al₂O₃: Compounding ratio of 30% by mass, purity of equal to or higher than 99% by mass, and particle size of equal to or less than 1 mm

Here, CaF₂ contained a small amount of MgO, SiO₂, and the like.

The raw materials were mixed with a gravity mixer to obtain a substantially uniform mixture.

Thereafter, the mixture was put into a three-phase arc furnace and heated to be equal to or higher than 1600°C under conditions of a current value of 3.0 to 3.5 kA and a voltage value of 150 to 200 V to melt the mixture to obtain a molten mixture. The melting time at this time was set to 3 hours.

After cooling, the obtained molten mixture was pulverized with a hammer mill and appropriately sieved to obtain a granular flux. The degree of the pulverization is shown in Table 1 below as "Mass ratio by particle size" (particle size was measured using a sieve for JIS test).

The obtained flux was XRD-analyzed using a device "D8 ADVANCE" manufactured by BRUKER, and then analyzed using analysis software "TOPAS" manufactured by BRUKER. As a result, a content proportion of each crystal phase of CaF₂, Al₂O₃, CaO·6Al₂O₃, and CaO in the entirety of the crystal phases in the flux was determined.

In the analysis, a literature value was used as a reference value for 2θ of each crystal phase.

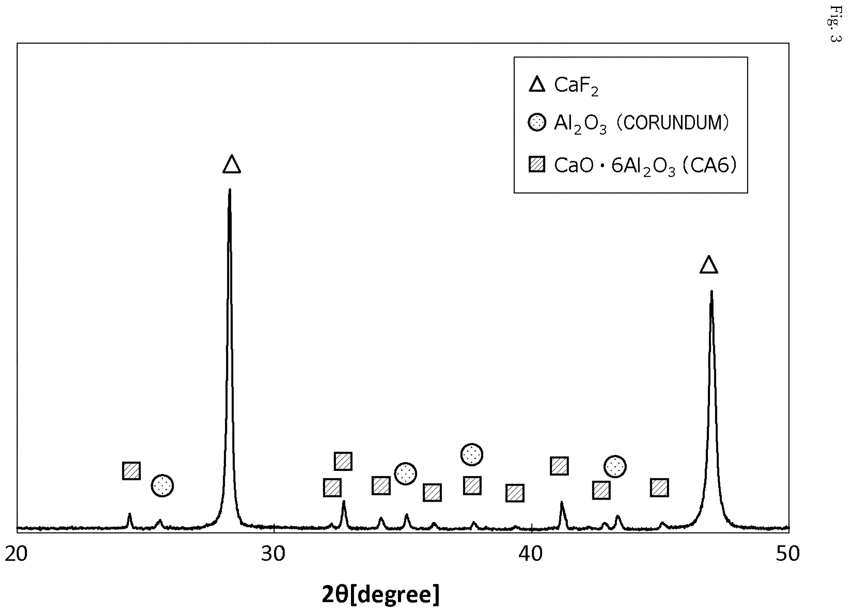

For the reference, an XRD chart of the flux of Example 1 is shown in Fig. 3.

In addition, the content proportion of the CaO component in the flux, the content proportion of the MgO component in the flux, and the content proportion of the SiO₂ component in the flux were determined by a fluorescent X-ray analysis method (XRF).

Specifically, first, peaks of Ca, Mg, and Si were obtained using a scanning fluorescent X-ray analyzer (ZSX Primus II) manufactured by Rigaku Corporation as an analyzer.

Next, for Mg and Si, intensities of the obtained peaks were applied to a calibration curve prepared in advance by a chemical analysis to determine the amounts of MgO and SiO₂. In this case, it was assumed that all of Mg and Si detected by XRF existed in the form of MgO and SiO₂, respectively.

On the other hand, regarding Ca, all Ca was detected as CaO bonded to oxygen atoms by the fluorescent X-ray analysis method, and Ca in CaF₂ is also regarded as CaO. Therefore, CaO is also measured by an ion electrode method and the content proportion of the CaO component was determined.

Specifically, first, water vapor HF from CaF₂ in and flux were generated, and the HF was taken into water to obtain an HF aqueous solution. The amount of fluorine in the aqueous solution was measured by the ion electrode method, and a measured value was converted into the CaF₂ content proportion in the flux.

Then, the content proportion of the CaF₂ component in the flux obtained above was cut from the content proportion of the CaO component detected by the fluorescent X-ray analysis method to determine the content proportion of the CaO component in the flux.

<Examples 2 and 3>

The flux was produced by the same raw materials and production method as in Example 1. In addition, various analyzes were performed.

### <Example 4>

First, a compound containing CaF₂ and a compound containing Al₂O₃ as raw materials were separately melted in an electric furnace at a temperature of equal to or higher than 1600°C and coarsely pulverized to have a maximum particle size of equal to or less than 2.8 mm (each raw material is the same as that prepared in Example 1).

Next, 70% by mass of the melt of the compound containing CaF₂ obtained above and 30% by mass of the melt of the compound containing Al₂O₃ obtained above were mixed.

From the above, a flux in which CaF₂ and Al₂O₃ basically exist as separate particles was obtained.

### <Comparative Example 1>

First, a compound containing CaF₂, a compound containing Al₂O₃, a compound containing CaO, and a compound containing MgO, as raw materials, were mixed to prepare a mixture. A mixing ratio was set to 40.0% by mass of the compound containing CaF₂, 29.5% by mass of the compound containing Al₂O₃, 28. 0% by mass of the compound containing CaO, and 2.5% by mass of the compound containing MgO.

Next, the mixture was melted in an electric furnace at a temperature of equal to or higher than 1600°C to obtain a melt.

The obtained melt was coarsely pulverized to have a particle size of equal to or less than 2.8 mm to obtain a granular flux.

### <Comparative Example 2>

The flux was produced by the same raw materials and production method as in Comparative Example 1.

### <Measurement of initial water content and hygroscopicity>

In order to study the difference in hygroscopicity depending on the particle size in addition to the hygroscopicity of the flux as an entirety, the flux was divided depending on the particle size and exposed to an environment of 30°C and 85% RH. Specifically, the flux was sieved and the water content was measured according to the following procedures (1) to (5).

(1) The flux passed through a sieve having a nominal opening of 2.8 mm (corresponding to the sieve of No. 7 of ASTM E11) defined by JIS Z 8801-1, and it was confirmed that no sieve residue remained (this time, no sieve residue was confirmed in any of Examples 1 to 4 and Comparative Examples 1 and 2).
(2) The flux passed through a sieve having a nominal opening of 1 mm defined by JIS Z 8801-1 (corresponding to a sieve of No. 18 of ASTM E11). As a result, fluxes having a particle size of 1 to 2.8 mm were sorted. Furthermore, the mass of the sieve residue that could not pass through the sieve was measured.
(3) The components which have passed through the sieve in above (2) passed a sieve having a nominal opening of 500 µm defined by JIS Z 8801-1 (corresponding to a sieve of No. 35 of ASTM E11). As a result, a flux having a particle size of 0.5 to 1 mm and a flux having a particle size of equal to or less than 0.5 mm were sorted. Then, the mass of the flux having a particle size of 0.5 to 1 mm and the flux (sieve residue) and the mass of the flux having a particle size of equal to or less of 0.5 mm (the component which has passed through the sieve) were measured.
(4) The flux having a particle size of 1 to 2.8 mm, a flux having a particle size of 0.5 to 1 mm, and a flux having a particle size of equal to or less than 0.5 mm which were obtained above were separately applied to an apparatus (Mitsubishi Chemical Analytech Co., Ltd./CA-100 type) to determine the water content using the karl fischer method.
(5) Separately, the fluxes having each particle size were put into a cylindrical aluminum plate (upper diameter: ϕ59 mm, lower diameter: ϕ45 mm) with an open upper part, at 3 points × 10 g for each particle size (9 points in total), and the time was passed in an environment of 30°C and 85% RH. Then, 7 days, 14 days, and 28 days after the start of aging, the aluminum plate containing the flux having each particle size was taken out together with the flux inside, and after sufficiently mixing, the water content was determined in the same manner as in (4) above.

Table 1 summarizes the composition of the flux components, a production method (outline), and the mass ratio by particle size. Table 2 summarizes the results of the above <Measurement of initial water content and hygroscopicity>.

The value in the "Total" column of Table 2 is a water content (unit: % by mass) of the flux "as an entirety" of each Example/Comparative Example, which was obtained by the sum (Σ) of the water content of the flux of each particle size × the mass ratio of each particle size in the entire flux before sieving. In the "total" column, a value at the time of 0 days of aging (immediately after production) is the water content W, and Value at the time of 14 days of aging - Value of 0 days of aging is the water content change ΔW (see Table 2 for ΔW).

**Table 1**

| | Composition [mass%] | | | | | | | | | | Mass [mass%] by particle size | | | |
|---|---|---|---|---|---|---|---|---|---|---|---|---|---|---|
| | Crystal phase | | | | | Chemical composition | | | | | | | | |
| | CaF₂ | CaO·6Al₂O₃ | CaO | Al₂O₃ | 12CaO·7Al₂O₃ | CaF₂ | CaO | Al₂O₃ | MgO | SiO₂ | 1.0 to 2.8 mm | 0.5 to 1.0 mm | up to 0.5 mm | Total |
| Example 1 | 70.0 | 17.1 | 0.0 | 12.3 | 0.0 | 70.0 | 3.06 | 28.0 | 0.02 | 0.36 | 38.5 | 10.6 | 50.9 | 100.0 |
| Example 2 | 65.6 | 27.9 | 0.0 | 5.2 | 0.0 | 65.6 | 3.96 | 30.7 | 0.02 | 0.64 | 31.8 | 19.1 | 49.1 | 100.0 |
| Example 3 | 66.5 | 23.0 | 0.0 | 9.3 | 0.0 | 66.5 | 3.56 | 30.4 | 0.02 | 0.60 | 44.0 | 13.1 | 42.9 | 100.0 |
| Example 4 | 69.0 | 0.0 | 0.0 | 31.3 | 0.0 | 69.0 | 1.14 | 31.3 | 0.17 | 0.11 | 17.5 | 29.7 | 52.8 | 100.0 |
| Comparative Example 1 | 38.5 | 0.0 | 0.0 | 0.0 | 57.4 | 38.5 | 27.2 | 30.2 | 2.43 | 1.10 | 41.5 | 43.1 | 15.4 | 100.0 |
| Comparative Example 2 | 44.3 | 0.0 | 0.0 | 0.0 | 54.0 | 44.3 | 25.3 | 28.7 | 0.15 | 1.15 | 24.2 | 25.1 | 50.6 | 100.0 |

**[Table 2] Table 2**

| | | Aging days | | | | ΔW |
|---|---|---|---|---|---|---|
| | | 0 | 7 | 14 | 28 | |
| Example 1 | Particle size of 1.0 to 2.8 mm | 0.003 | 0.003 | 0.003 | 0.003 | |
| | Particle size of 0.5 to 1.0 mm | 0.002 | 0.003 | 0.003 | 0.002 | |
| | Particle size of up to 0.5 mm | 0.017 | 0.014 | 0.015 | 0.014 | |
| | Total | 0.010 | 0.009 | 0.009 | 0.009 | -0.001 |
| Example 2 | Particle size of 1.0 to 2.8 mm | *0.006* | 0.004 | 0.004 | 0.004 | |
| | Particle size of 0.5 to 1.0 mm | 0.005 | 0.004 | 0.004 | 0.004 | |
| | Particle size of up to 0.5 mm | 0.019 | 0.018 | 0.021 | 0.019 | |
| | Total | 0.012 | 0.011 | 0.013 | 0.011 | 0.001 |
| Example 3 | Particle size of 1.0 to 2.8 mm | 0.001 | 0.002 | 0.002 | 0.002 | |
| | Particle size of 0.5 to 1.0 mm | 0.000 | 0.001 | 0.001 | 0.001 | |
| | Particle size of up to 0.5 mm | 0.007 | 0.008 | 0.008 | 0.009 | |
| | Total | 0.003 | 0.005 | 0.004 | 0.005 | 0.001 |
| Example 4 | Particle size of 1.0 to 2.8 mm | 0.007 | 0.009 | 0.008 | 0.006 | |
| | Particle size of 0.5 to 1.0 mm | 0.015 | 0.017 | 0.018 | 0.016 | |
| | Particle size of up to 0.5 mm | 0.039 | 0.044 | 0.045 | 0.042 | |
| | Total | 0.026 | 0.030 | 0.030 | 0.028 | 0.004 |
| Comparative Example 1 | Particle size of 1.0 to 2.8 mm | 0.065 | 0.246 | 0.221 | (No data acquired) | |
| | Particle size of 0.5 to 1.0 mm | 0.056 | 0.180 | 0.163 | | |
| | Particle size of up to 0.5 mm | 0.116 | 0.412 | 0.429 | | |
| | Total | 0.069 | 0.243 | 0.228 | | 0.159 |
| Comparative Example 2 | Particle size of 1.0 to 2.8 mm | 0.014 | 0.030 | 0.042 | 0.053 | |
| | Particle size of 0.5 to 1.0 mm | 0.012 | 0.028 | 0.038 | 0.049 | |
| | Particle size of up to 0.5 mm | 0.031 | 0.075 | 0.110 | 0.134 | |
| | Total | 0.022 | 0.052 | 0.075 | 0.093 | 0.053 |

In Table 2, when the water content change over time is viewed by the particle size, it can be seen that the smaller the particle size, the larger the water content tends to be.

### <Production (refining) of high-purity steel>

Using the fluxes of Examples 1 to 4 which aged for 28 days or longer after the production, the raw material steel containing impurities such as sulfur was refined in an ESR furnace as shown in Figs. 1 and 2 to obtain an ingot. It was confirmed that an ingot with sufficiently suppressed hydrogen embrittlement could be produced with a high yield. In particular, when the fluxes of Examples 1 to 3 were used, hydrogen embrittlement could be further suppressed compared to a case of using the flux of Example 4, and the yield was further good.

On the other hand, the flux of Comparative Example 1 or 2 that had passed 28 days or longer after the production was used instead of the flux of Examples 1 to 4. Thus, hydrogen embrittlement was not suppressed compared to Examples 1 to 4, and the ingot yield showed a poor result (especially in a case of using the flux of Comparative Example 1, the yield was poor).

From the above, when the raw material steel is refined by an ESR method using a flux having W of equal to or less than 0.03% by mass and ΔW of equal to or less than 0.01% by mass, it was found that a high-purity metal with suppressed hydrogen embrittlement can be produced with good yield.

Priority is claimed on Japanese Patent Application No. 2019-058333, filed on March 26, 2019, the entire disclosure of which is incorporated herein.

### REFERENCE SIGNS LIST

- 1:: ESR furnace
- 2:: power supply
- 10:: electrode
- 11A:: flux
- 11:: slag
- 12:: molten pool
- 13:: ingot

## Claims

1. A flux used in an electro-slag remelting method,
wherein when a water content of the flux determined using a karl fischer method is W and a water content change when the flux is placed in an environment of 30°C and 85% RH for 14 days is ΔW, W is equal to or less than 0.03% by mass and ΔW is equal to or less than 0.01% by mass.

2. The flux according to claim 1,
wherein W is equal to or less than 0.02% by mass.

3. The flux according to claim 1 or 2,
wherein ΔW is equal to or less than 0.003% by mass.

4. The flux according to any one of claims 1 to 3, further comprising:
CaF₂;
and
Al₂O₃.

5. The flux according to any one of claims 1 to 4,
wherein a content of a CaO component in an entirety of the flux is equal to or more than 0.1% by mass and equal to or less than 7% by mass.

6. The flux according to any one of claims 1 to 5, further comprising CaO·6Al₂O₃.

7. The flux according to any one of claims 1 to 6, further comprising a molten mixture of CaF₂ and Al₂O₃.

8. The flux according to any one of claims 1 to 7,
wherein the flux is granular at a room temperature.

9. The flux according to claim 8,
wherein when the flux is passed through a sieve having a nominal opening of 500 µm specified in JIS Z 8801-1, a passage rate is equal to or less than 55% by mass.

10. A method for producing a high-purity steel, the method comprising:
a step of refining a raw material steel into a high-purity steel by remelting using an electro-slag remelting method,
wherein a melt of the flux according to any one of claims 1 to 9 is used as a molten slag.

11. A method for producing the flux according to any one of claims 1 to 9, the method comprising:
a melt mixing step of melting and mixing, at least, a compound containing CaF₂ and a compound containing Al₂O₃ at equal to or higher than 1600°C.
